# EUROPEAN PATENT APPLICATION

(11) **EP 4 722 268 A1**
(43) Date of publication of application: **08.04.2026**
(21) Application number: 24815413.0
(22) Date of filing: 24.05.2024
(51) Int. Cl.: C08G 18/24, C08G 18/00, C08G 101/00

(54) **CATALYST COMPOSITION FOR PRODUCTION OF POLYURETHANE FOAM AND METHOD FOR PRODUCING POLYURETHANE FOAM USING SAME**

(30) Priority: 30.05.2023 JP 2023088929
(71) Applicant: Nitto Kasei Co., Ltd., Osaka-shi Osaka 533-0031 (JP)
(72) Inventor: YOSHIYAMA, Haruka, Osaka-shi, Osaka 533-0031 (JP)
(74) Representative: Gulde & Partner
(86) International application number: PCT/JP2024/019254
(87) International publication number: WO 2024/247930

(57) **Abstract**

An object of the present invention is to provide a catalyst composition for producing polyurethane foam that is highly safe, has a practical curing speed, and allows the produced polyurethane foam to meet air permeability requirements. According to the present invention, a catalyst composition for producing polyurethane foam containing a tin compound (A) and a tin compound (B) is provided.

## Description

### [Technical Field]

The present invention relates to a catalyst composition for producing polyurethane foam, and a method for producing polyurethane foam using the same.

### [Background Art]

Polyurethane foam is produced by adding a catalyst, a blowing agent, a surfactant, etc. to main raw materials of polyol and polyisocyanate, and is used for various types of foams. For example, it is widely used after being processed into flexible foams such as cushions and mattresses, and rigid foams for building materials, home appliances, and the like.

As catalysts for forming polyurethane foam, resinification catalysts such as amine compounds and blowing catalysts such as metal compounds and amine compounds are used. As the metal compounds, tin, lead, bismuth, zirconium, etc. are used, and among them, tin octylate (tin 2-ethylhexanoate) has been widely used (PTLs 1 and 2).

However, in recent years, the use of tin 2-ethylhexanoate has become a problem in terms of environment and safety, and alternative catalysts are desired. For example, proposals have been made to use tin n-octoate, tin n-nonanoate, tin isononanoate, neodecanoic acid, etc. as alternative catalysts, but there have been problems that they do not have a practical curing speed or that the air permeability of the obtained polyurethane foam is not satisfactory, and there was room for improvement (PTLs 3 and 4).

### [Citation List]

### [Patent Literature]

[PTL 1] Japanese Unexamined Patent Application Publication No. 2023-32584
[PTL 2] Japanese Unexamined Patent Application Publication No. 2022-73861
[PTL 3] Japanese Unexamined Patent Application Publication No. 2011-21188
[PTL 4] WO 2014/106642

### [Summary of Invention]

### [Technical Problem]

Therefore, the development of a catalyst for producing polyurethane foam that is highly safe (low in toxicity and environmental pollution), has a practical curing speed, and allows the produced polyurethane foam to meet air permeability requirements has been desired.

The present invention has been made in view of such circumstances, and an object thereof is to provide a catalyst composition for producing polyurethane foam that is highly safe, has a practical curing speed, and allows the produced polyurethane foam to meet air permeability requirements.

### [Solution to Problem]

According to the present invention, the following inventions are provided.
[1] A catalyst composition for producing polyurethane foam, comprising a tin compound (A) represented by the following chemical formula (1) and a tin compound (B) represented by the following chemical formula (2). 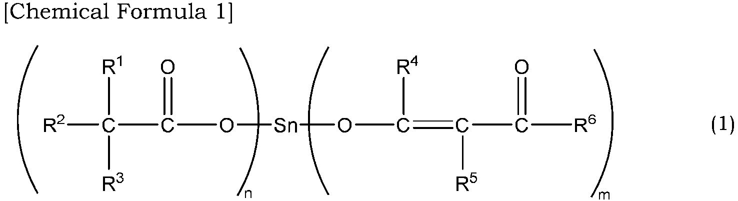 (In the formula, R¹, R², and R³ are each a hydrogen atom or a hydrocarbon group having 1 to 10 carbon atoms, and may be the same as or different from each other. R⁴ and R⁶ are each a substituted or unsubstituted hydrocarbon group having 1 to 20 carbon atoms, or a substituted or unsubstituted alkoxy group having 1 to 20 carbon atoms, and may be the same as or different from each other. R⁵ is a hydrogen atom, a hydrocarbon group having 1 to 10 carbon atoms, or a halogen. n and m are integers, n = 0 or 1, and n + m = 2.) 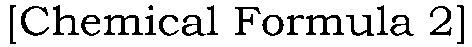 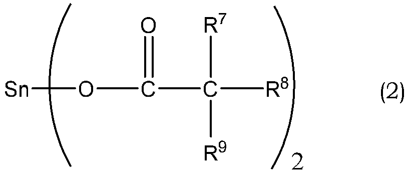 (In the formula, R⁷, R⁸, and R⁹ are each a hydrogen atom or an alkyl group having 1 to 10 carbon atoms, and may be the same as or different from each other.)
[2] The catalyst composition according to [1], wherein the tin compound (A) represented by the chemical formula (1) is one or more selected from the group consisting of acetylacetone-neodecanoic acid tin, ethyl acetoacetate-neodecanoic acid tin, 3,5-heptanedione-neodecanoic acid tin, 3-chloroacetylacetone-neodecanoic acid tin, dipivaloylmethane-neodecanoic acid tin, 1,3-diphenyl-1,3-propanedione-neodecanoic acid tin, 1-phenyl-1,3-butanedione-neodecanoic acid tin, bis(acetylacetone) tin, bis(ethyl acetoacetate) tin, bis(3,5-heptanedione) tin, bis(3-chloroacetylacetone) tin, bis(dipivaloylmethane) tin, bis(1,3-diphenyl-1,3-propanedione) tin, and bis(1-phenyl-1,3-butanedione) tin.
[3] The catalyst composition according to [1] or [2], wherein the tin compound (B) represented by the chemical formula (2) is bis(neodecanoic acid) tin.
[4] The catalyst composition according to any one of [1] to [3], wherein the content of the tin compound (A) is 1 to 50 mass% with respect to the tin compound (B).
[5] A method for producing a polyurethane foam, comprising reacting an active hydrogen-containing organic compound containing a polyol with a polyisocyanate in the presence of the catalyst composition according to any one of [1] to [4].

### [Advantageous Effects of Invention]

The catalyst composition of the present invention has a practical curing speed. In addition, the polyurethane foam produced using the catalyst composition of the present invention has excellent air permeability, and thus satisfies air permeability requirements. Furthermore, since the catalyst composition of the present invention can achieve the above-mentioned excellent effects without containing tin 2-ethylhexanoate, it is not necessary to contain tin 2-ethylhexanoate, and the safety is high. Therefore, according to the present invention, a catalyst composition for producing polyurethane foam is provided which is highly safe, has a practical curing speed, and allows the produced polyurethane foam to meet air permeability requirements.

### [Description of Embodiments]

Next, the present invention will be described in detail.

### 1. Catalyst Composition

The catalyst composition of the present invention contains a tin compound (A) and a tin compound (B). The catalyst composition of the present invention preferably does not contain tin 2-ethylhexanoate, but may contain it. When the total of the tin compound (A) and the tin compound (B) is 100 mass%, the content of tin 2-ethylhexanoate is, for example, 0 to 10 mass%, preferably 0 to 5 mass%, and more preferably 0 to 1 mass%.

The content of the tin compound (A) in the catalyst composition of the present invention is preferably 0.1 to 200 mass%, more preferably 0.5 to 100 mass%, still more preferably 1 to 50 mass%, and even more preferably 5 to 30 mass%, with respect to the tin compound (B). The content of the tin compound (A) with respect to the tin compound (B) is, specifically, for example, 0.1, 0.5, 1, 2, 3, 4, 5, 10, 15, 20, 25, 30, 40, 50, 100, 200 mass%, and may be in a range between any two of the numerical values exemplified here.

The amount of the catalyst composition of the present invention to be used is not particularly limited, but is preferably in the range of 0.01 to 1 part by mass, and more preferably in the range of 0.05 to 0.5 parts by mass, per 100 parts by mass of the active hydrogen-containing organic compound containing a polyol.

The catalyst composition of the present invention may further contain an additional catalyst, if necessary. Examples of the additional catalyst include other resinification catalysts, blowing catalysts, organometallic catalysts, metal carboxylate catalysts, or quaternary ammonium salt catalysts. Examples of other resinification catalysts include amine-based catalysts such as 1,4-diazabicyclo[2.2.2]octane (DABCO), triethylenediamine, N,N-dicyclohexylmethylamine, N,N-dimethylcyclohexylamine, N,N-dimethylaminohexanol, 1,2-dimethylimidazole, N-(N',N'-dimethylaminoethyl)-morpholine, tetramethylguanidine, dimethylaminoethanol, N-methyl-N'-(2-hydroxyethyl)-piperazine, N,N,N',N'-tetramethylpropane-1,3-diamine, N,N'-dimethylpiperazine, N,N,N',N'-tetramethylhexane-1,6-diamine, N,N,N',N",N"-pentamethyldipropylenetriamine, N-(2-hydroxyethyl)morpholine, ethylene glycol bis(3-dimethyl)-aminopropyl ether, and N-methyl-N'-(2-dimethylamino)ethylpiperazine.

Examples of the blowing catalyst include amine-based catalysts such as bis(2-dimethylaminoethyl) ether, triethylamine, dimethylaminoethoxyethanol, N,N,N'-trimethylaminoethyl-ethanolamine, and N,N,N',N",N"-pentamethyldiethylenetriamine. The blending amount of the additional catalyst is preferably 0.01 to 1.0 part by mass, more preferably 0.02 to 0.5 parts by mass, and still more preferably 0.05 to 0.2 parts by mass, per 100 parts by mass of the polyol.

### 1-1 Tin Compound (A)

The tin compound (A) used in the present invention is represented by the chemical formula (1).

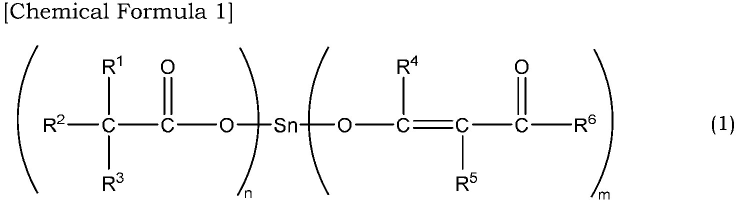

In the formula, R¹, R², and R³ are each a hydrogen atom or a hydrocarbon group having 1 to 10 carbon atoms, and may be the same as or different from each other. R⁴ and R⁶ are each a substituted or unsubstituted hydrocarbon group having 1 to 20 carbon atoms, or a substituted or unsubstituted alkoxy group having 1 to 20 carbon atoms, and may be the same as or different from each other. R⁵ is a hydrogen atom, a hydrocarbon group having 1 to 10 carbon atoms, or a halogen. n and m are integers, n = 0 or 1, and n + m = 2.

In the formula, examples of the alkyl group having 1 to 10 carbon atoms represented by R¹, R², and R³ include, for example, methyl, ethyl, propyl, isopropyl, butyl, isobutyl, sec-butyl, tert-butyl, 3-methylbutyl, pentyl, hexyl, heptyl, octyl, ethylhexyl, nonyl, decyl, and the like. The number of carbon atoms is, specifically, for example, 1, 2, 3, 4, 5, 6, 7, 8, 9, 10, and may be within a range between any two of the numerical values exemplified here. The combination of R¹, R², and R³ is preferably such that R¹ + R² + R³ = C8, that is, the group on the left side of the chemical formula (1) is a neodecanoxy group.

In the formula, examples of the substituted or unsubstituted hydrocarbon group having 1 to 20 carbon atoms represented by R⁴ and R⁶ include, for example, methyl, ethyl, propyl, isopropyl, butyl, isobutyl, sec-butyl, tert-butyl, pentyl, hexyl, heptyl, octyl, ethylhexyl, nonyl, decyl, undecyl, dodecyl, tridecyl, tetradecyl, pentadecyl, hexadecyl, heptadecyl, octadecyl, nonadecyl, icosyl, phenyl, and the like. These alkyl groups may be substituted with an alkoxy group, a hydroxyl group, a halogen, a phenyl group, or the like.

Examples of the substituted or unsubstituted alkoxy group having 1 to 20 carbon atoms include, for example, methoxy group, ethoxy group, propoxy group, isopropoxy group, butoxy group, isobutoxy group, sec-butoxy group, tert-butoxy group, pentoxy group, hexanoxy group, heptanoxy group, octanoxy group, ethylhexanoxy group, nonanoxy group, decanoxy group, undecanoxy group, dodecanoxy group, tridecanoxy group, tetradecanoxy group, pentadecanoxy group, hexadecanoxy group, heptadecanoxy group, octadecanoxy group, nonadecanoxy group, and the like. These alkoxy groups may be substituted with an alkoxy group, a hydroxyl group, a halogen, a phenyl group, or the like.

In the formula, examples of the hydrocarbon group having 1 to 10 carbon atoms represented by R⁵ include, for example, methyl, ethyl, propyl, isopropyl, butyl, isobutyl, sec-butyl, tert-butyl, pentyl, hexyl, heptyl, octyl, ethylhexyl, nonyl, decyl, phenyl, and the like.
Examples of the halogen include, for example, fluoride, chloro, bromo, iodo, and the like.

Specific examples of the tin compound (A) include acetylacetone-neodecanoic acid tin, ethyl acetoacetate-neodecanoic acid tin, 3,5-heptanedione-neodecanoic acid tin, 3-chloroacetylacetone-neodecanoic acid tin, dipivaloylmethane-neodecanoic acid tin, 1,3-diphenyl-1,3-propanedione-neodecanoic acid tin, 1-phenyl-1,3-butanedione-neodecanoic acid tin, bis(acetylacetone) tin, bis(ethyl acetoacetate) tin, bis(3,5-heptanedione) tin, bis(3-chloroacetylacetone) tin, bis(dipivaloylmethane) tin, bis(1,3-diphenyl-1,3-propanedione) tin, bis(1-phenyl-1,3-butanedione) tin, and the like, with acetylacetone-neodecanoic acid tin and ethyl acetoacetate-neodecanoic acid tin being preferable. These tin compounds may be used alone or in combination of two or more.

### 1-2 Tin Compound (B)

The tin compound (B) used in the present invention is represented by the chemical formula (2). 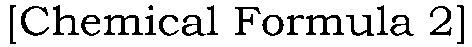 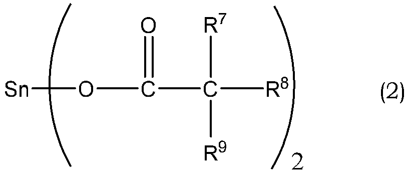 (In the formula, R⁷, R⁸, and R⁹ are each a hydrogen atom or an alkyl group having 1 to 10 carbon atoms, and may be the same as or different from each other.)

In the formula, examples of the alkyl group having 1 to 10 carbon atoms represented by R⁷, R⁸, and R⁹ include, for example, methyl, ethyl, propyl, isopropyl, butyl, isobutyl, sec-butyl, tert-butyl, 3-methylbutyl, pentyl, hexyl, heptyl, octyl, ethylhexyl, nonyl, decyl, and the like. The number of carbon atoms is, specifically, for example, 1, 2, 3, 4, 5, 6, 7, 8, 9, 10, and may be within a range between any two of the numerical values exemplified here.

Specific examples of the tin compound (B) include tin diacetate, tin dipivalate, bis(2-ethylbutanoic acid) tin, bis(2-ethylhexanoic acid) tin, bis(n-octylic acid) tin, bis(neononanoic acid) tin, bis(isononanoic acid) tin, bis(neodecanoic acid) tin, and the like, with bis(2-ethylhexanoic acid) tin, bis(isononanoic acid) tin, and bis(neodecanoic acid) tin being preferable. These tin compounds may be used alone or in combination of two or more.

### 1-3 Method for Producing Catalyst Composition

The catalyst composition of the present invention may be prepared by mixing the tin compound (A) and the tin compound (B) after producing each of them, or by producing the tin compound (A) and the tin compound (B) simultaneously.
The tin compounds (A) and (B) can be produced by a known method. For example, they can be produced by heating various carboxylic acids and/or β-diketone compounds and stannous chloride in a solvent at a temperature of about 30 to 70°C in the presence of an alkali compound. Commercially available products can also be used, and examples include 2-ethylhexanoic acid, isononanoic acid, neodecanoic acid, Versatic 10, and the like.

### 2. Polyurethane Foam

The method for producing a polyurethane foam of the present invention is characterized by reacting and foaming an active hydrogen-containing organic compound containing a polyol and a polyisocyanate in the presence of the catalyst composition.

### 2-1 Active Hydrogen-Containing Organic Compound Including Polyol

An active hydrogen-containing organic compound is an organic compound having active hydrogen. Active hydrogen is a hydrogen of a functional group capable of reacting with an isocyanate to form a urethane bond or a urea bond. Examples of such a functional group include a hydroxyl group and an amino group. Examples of the active hydrogen-containing organic compound include an organic compound having two or more of the above functional groups in the molecule. The active hydrogen-containing organic compound specifically includes a polyol (a compound having two or more hydroxyl groups at the molecular ends). The active hydrogen-containing organic compound may contain only a polyol, or may contain both a polyol and an active hydrogen-containing organic compound other than a polyol (or a polyamine, etc.). The polyol is not particularly limited as long as it is generally used for the production of urethane compositions, and examples thereof include polyether polyols, polyester polyols, polymer polyols, and further flame-retardant polyols such as phosphorus-containing polyols and halogen-containing polyols. These polyols may be used alone or in combination as appropriate.

Examples of the polyether polyol include those obtained by ring-opening addition polymerization of, for example, ethylene oxide, propylene oxide, or a mixture thereof, using, for example, ethylene glycol, propylene glycol, glycerin, pentaerythritol, ethylenediamine, ethanolamine, diethanolamine, or the like as an initiator, or polytetramethylene ether glycol obtained by ring-opening polymerization of tetrahydrofuran.

Examples of the polyester polyol include those obtained by a condensation reaction between a polybasic carboxylic acid such as maleic acid, fumaric acid, succinic acid, adipic acid, sebacic acid, azelaic acid, phthalic acid, isophthalic acid, terephthalic acid, or trimellitic acid and a polyhydric alcohol, and polymers of lactones. Examples of the polyhydric alcohol include ethylene glycol, diethylene glycol, triethylene glycol, propylene glycol, dipropylene glycol, 1,3-butylene glycol, 1,4-butylene glycol, 1,5-pentanediol, 1,6-hexanediol, neopentyl glycol, decamethylene glycol, 2,4,4-trimethyl-1,3-pentanediol, cyclohexanediol, cyclohexanedimethanol, xylylene glycol, hydroquinone bis(hydroxyethyl ether), hydrogenated bisphenol A, trimethylolpropane, glycerin, 1,2,6-hexanetriol, pentaerythritol, castor oil, and the like. Also included are oil-modified polyester polyols obtained by blending a higher fatty acid such as coconut oil fatty acid, linseed oil fatty acid, soybean oil fatty acid, cottonseed oil fatty acid, tung oil fatty acid, or castor oil fatty acid in the acid component. The polymers of lactones include those obtained by ring-opening polymerization of ε-caprolactam, α-methyl-ε-caprolactam, ε-methyl-ε-caprolactam, and the like.

Examples of the polymer polyol include compounds obtained by polymerizing or copolymerizing a hydroxyl group-containing polymerizable monomer such as hydroxyethyl acrylate, hydroxybutyl acrylate, or trimethylolpropane acrylic acid monoester alone, or with a monomer copolymerizable therewith, such as acrylic acid, methacrylic acid, styrene, acrylonitrile, or α-methylstyrene.

Examples of the flame-retardant polyol include phosphorus-containing polyols obtained by adding an alkylene oxide to a phosphoric acid compound, polyols obtained by ring-opening polymerization of epichlorohydrin or trichlorobutylene oxide, and halogen-containing polyols in which some or all of the hydrogen atoms of a polyether polyol, a polyester polyol, or an acrylic polyol are substituted with fluorine atoms.

Examples of polyamines include aliphatic polyamines and aromatic polyamines. Examples of aliphatic polyamines include ethylenediamine, polyether polyamines, etc. Examples of aromatic polyamines include 3,3'-dichloro-4,4'-diaminodiphenylmethane, DETDA, 2,4-diamino-3,5-diethyltoluene, 2,6-diamino-3,5-diethyltoluene, and mixtures thereof, mixed products such as Ethacure 100 (mass ratio of 2,4-isomer/2,6-isomer of about 80/20) manufactured by Albemarle Corporation, Ethacure 420 (4,4'-methylenebis(N-sec-butylaniline)) manufactured by Albemarle Corporation, 4,4'-methylenebis(2-ethyl-6-methylaniline), and the like.

These active hydrogen-containing organic compounds can be used singly or in combination of two or more. In particular, it is preferable that the active hydrogen-containing organic compound contains both a polyol and a polyamine. In this case, workability, curability, and mechanical properties of the composition become particularly good.

### 2-2 Polyisocyanate

A polyisocyanate is a compound having two or more isocyanate groups in the molecule, and is not particularly limited as long as it is one that is generally used. Examples thereof include alkylene diisocyanates such as trimethylene diisocyanate, trimethylhexamethylene diisocyanate, tetramethylene diisocyanate, and hexamethylene diisocyanate; cycloalkylene-based diisocyanates such as bis(isocyanatomethyl)cyclohexane, cyclopentane diisocyanate, cyclohexane diisocyanate, and isophorone diisocyanate; aromatic diisocyanates such as tolylene diisocyanate, phenylene diisocyanate, diphenylmethane diisocyanate, and diphenyl ether diisocyanate; araliphatic diisocyanates such as xylylene diisocyanate and diisocyanatodiethylbenzene; triisocyanates such as triphenylmethane triisocyanate, triisocyanatobenzene, and triisocyanatotoluene; tetraisocyanates such as diphenyldimethylmethane tetraisocyanate; polymerized polyisocyanates such as tolylene diisocyanate dimer and trimer; and terminal isocyanate-containing compounds obtained by reacting these polyisocyanates in excess with a low-molecular-weight active hydrogen-containing organic compound such as ethylene glycol, propylene glycol, diethylene glycol, trimethylolpropane, hydrogenated bisphenol A, hexanetriol, glycerin, pentaerythritol, castor oil, or triethanolamine.

The content of the polyisocyanate of the present invention is preferably 1 to 100 parts by mass, preferably 5 to 70 parts by mass, more preferably 20 to 60 parts by mass, and even more preferably 30 to 50 parts by mass, per 100 parts by mass of the active hydrogen-containing organic compound. This content is, specifically, for example, 1, 5, 10, 15, 20, 30, 40, 50, 60, 70, 80, 90, 100 parts by mass, and may be within a range between any two of the numerical values exemplified here.

### 2-3 Other Components

In the method for producing a polyurethane foam of the present invention, a blowing agent, a surfactant, a flame retardant, a crosslinking agent, and the like can be used as necessary. Furthermore, if necessary, a colorant, an anti-aging agent, and other conventionally known additives can also be used.

As the blowing agent, water, alternative fluorocarbons, hydrocarbons such as dichloromethane or pentane can be used alone or in combination. Water is particularly preferable as the blowing agent. In the case of water, carbon dioxide gas is generated during the reaction of the polyol and the polyisocyanate, and foaming is performed by the carbon dioxide gas. The amount of water as a blowing agent is preferably 1.0 to 5.0 parts by mass, and more preferably 2.0 to 4.0 parts by mass, per 100 parts by mass of the polyol.

The foam stabilizer may be any one that is usually adopted as a raw material for polyurethane foam, and examples thereof include silicone-based compounds, nonionic surfactants, and the like. The amount of the foam stabilizer is preferably 0.1 to 4.0 parts by mass, more preferably 0.2 to 2.0 parts by mass, and still more preferably 0.3 to 1.0 part by mass, per 100 parts by mass of the polyol.

### 2-4 Production Method

The polyurethane foam of the present invention can be produced, for example, by mixing and stirring the above materials using a stirrer, a dedicated polyurethane foaming machine, or the like, and then injecting the mixture into a container or a mold for foam molding.

### [EXAMPLE]

Hereinafter, the present invention will be specifically described with reference to examples, but the scope of the present invention is not limited by these examples.

### <Production Example 1 (Acetylacetone-neodecanoic acid tin <A1>)>

In a 10 ml eggplant-shaped flask equipped with a nitrogen inlet tube, 1.0 g of tin(II) ethoxide, 0.48 g of acetylacetone, 0.82 g of neodecanoic acid, and 2 mL of ethanol were weighed and stirred with a magnetic stirrer until dissolved. The solvent was distilled off under reduced pressure to obtain 1.86 g of a yellow liquid, acetylacetone-neodecanoic acid tin <A1>. In the 119Sn NMR analysis of this compound, a new peak of acetylacetone-neodecanoic acid tin (-0.558 ppm) was confirmed.

### <Production Example 2 (3,5-Heptanedione-neodecanoic acid tin <A2>)>

In a 10 ml eggplant-shaped flask equipped with a nitrogen inlet tube, 1.0 g of tin(II) ethoxide, 0.61 g of 3,5-heptanedione, 0.82 g of neodecanoic acid, and 2 mL of ethanol were weighed and stirred with a magnetic stirrer until dissolved. The solvent was distilled off under reduced pressure to obtain 2.00 g of a yellow liquid, 3,5-heptanedione-neodecanoic acid tin <A2>. In the 119Sn NMR analysis of this compound, a new peak of 3,5-heptanedione-neodecanoic acid tin (-0.558 ppm) was confirmed.

### <Production Example 3 (3-Chloroacetylacetone-neodecanoic acid tin <A3>)>

In a 10 ml eggplant-shaped flask equipped with a nitrogen inlet tube, 1.0 g of tin(II) ethoxide, 0.64 g of 3-chloroacetylacetone, 0.82 g of neodecanoic acid, and 2 mL of ethanol were weighed and stirred with a magnetic stirrer until dissolved. The solvent was distilled off under reduced pressure to obtain 2.03 g of a yellow liquid, 3-chloroacetylacetone-neodecanoic acid tin <A3>. In the 119Sn NMR analysis of this compound, a new peak of 3-chloroacetylacetone-neodecanoic acid tin (-0.558 ppm) was confirmed.

<Production Example 4 (Dipivaloylmethane-neodecanoic acid tin <A4>)>

In a 10 ml eggplant-shaped flask equipped with a nitrogen inlet tube, 1.0 g of tin(II) ethoxide, 0.88 g of dipivaloylmethane, 0.82 g of neodecanoic acid, and 2 mL of ethanol were weighed and stirred with a magnetic stirrer until dissolved. The solvent was distilled off under reduced pressure to obtain 2.27 g of a yellow liquid, dipivaloylmethane-neodecanoic acid tin <A4>. In the 119Sn NMR analysis of this compound, a new peak of dipivaloylmethane-neodecanoic acid tin (-0.558 ppm) was confirmed.

### <Production Example 5 (1,3-Diphenyl-1,3-propanedione-neodecanoic acid tin <A5>)>

In a 10 ml eggplant-shaped flask equipped with a nitrogen inlet tube, 1.0 g of tin(II) ethoxide, 1.07 g of 1,3-diphenyl-1,3-propanedione, 0.82 g of neodecanoic acid, and 2 mL of ethanol were weighed and stirred with a magnetic stirrer until dissolved. The solvent was distilled off under reduced pressure to obtain 2.46 g of a yellow liquid, 1,3-diphenyl-1,3-propanedione-neodecanoic acid tin <A5>. In the 119Sn NMR analysis of this compound, a new peak of 1,3-diphenyl-1,3-propanedione-neodecanoic acid tin (-0.558 ppm) was confirmed.

### <Production Example 6 (1-Phenyl-1,3-butanedione-neodecanoic acid tin <A6>)>

In a 10 ml eggplant-shaped flask equipped with a nitrogen inlet tube, 1.0 g of tin(II) ethoxide, 0.78 g of 1-phenyl-1,3-butanedione, 0.82 g of neodecanoic acid, and 2 mL of ethanol were weighed and stirred with a magnetic stirrer until dissolved. The solvent was distilled off under reduced pressure to obtain 2.46 g of a yellow liquid, 1-phenyl-1,3-butanedione-neodecanoic acid tin <A6>. In the 119Sn NMR analysis of this compound, a new peak of 1-phenyl-1,3-butanedione-neodecanoic acid tin (-0.558 ppm) was confirmed.

### <Production Example 7 (Ethyl acetoacetate-neodecanoic acid tin <A7>)>

In a 10 ml eggplant-shaped flask equipped with a nitrogen inlet tube, 1.0 g of tin(II) ethoxide, 0.62 g of ethyl acetoacetate, 0.82 g of neodecanoic acid, and 2 mL of ethanol were weighed and stirred with a magnetic stirrer until dissolved. The solvent was distilled off under reduced pressure to obtain 2.01 g of a yellow liquid, ethyl acetoacetate-neodecanoic acid tin <A7>. In the 119Sn NMR analysis of this compound, a new peak of ethyl acetoacetate-neodecanoic acid tin (-0.558 ppm) was confirmed.

### <Production Example 8 (Acetylacetone-neodecanoic acid tin/bis(neodecanoic acid) tin mixture <AB1>)>

In a 50 ml eggplant-shaped flask equipped with a nitrogen inlet tube, 18.0 g of bis(neodecanoic acid) tin and 2.0 g of acetylacetone were weighed, and the temperature was raised to around an internal temperature of 80°C while stirring with a magnetic stirrer. After reaching an internal temperature of 80°C, stirring was continued for 2 hours to obtain 20.00 g of a yellow liquid, an acetylacetone-neodecanoic acid tin/bis(neodecanoic acid) tin mixture <AB1>. In the 119Sn NMR analysis of this compound, it was confirmed that, in addition to the peak of bis(neodecanoic acid) tin (-0.500 ppm), a new peak of acetylacetone-neodecanoic acid tin (-0.558 ppm) appeared.

### <Production Example 9 (Acetylacetone-neodecanoic acid tin/bis(neodecanoic acid) tin mixture <AB2>)>

In a 50 ml eggplant-shaped flask equipped with a nitrogen inlet tube, 19.4 g of bis(neodecanoic acid) tin and 0.6 g of acetylacetone were weighed, and the temperature was raised to around an internal temperature of 80°C while stirring with a magnetic stirrer. After reaching an internal temperature of 80°C, stirring was continued for 2 hours to obtain 20.00 g of a yellow liquid, an acetylacetone-neodecanoic acid tin/bis(neodecanoic acid) tin mixture <AB2>. In the 119Sn NMR analysis of this compound, it was confirmed that, in addition to the peak of bis(neodecanoic acid) tin (-0.500 ppm), a new peak of acetylacetone-neodecanoic acid tin (-0.558 ppm) appeared.

### <Production Example 10 (3,5-Heptanedione-neodecanoic acid tin/bis(neodecanoic acid) tin mixture <AB3>)>

In a 50 ml eggplant-shaped flask equipped with a nitrogen inlet tube, 19.4 g of bis(neodecanoic acid) tin and 0.6 g of 3,5-heptanedione were weighed, and the temperature was raised to around an internal temperature of 80°C while stirring with a magnetic stirrer. After reaching an internal temperature of 80°C, stirring was continued for 2 hours to obtain 20.00 g of a yellow liquid, a 3,5-heptanedione-neodecanoic acid tin/bis(neodecanoic acid) tin mixture <AB3>. In the 119Sn NMR analysis of this compound, it was confirmed that, in addition to the peak of bis(neodecanoic acid) tin (-0.500 ppm), a new peak of 3,5-heptanedione-neodecanoic acid tin (-0.558 ppm) appeared.

### <Production Example 11 (3-Chloroacetylacetone-neodecanoic acid tin/bis(neodecanoic acid) tin mixture <AB4>)>

In a 50 ml eggplant-shaped flask equipped with a nitrogen inlet tube, 19.4 g of bis(neodecanoic acid) tin and 0.6 g of 3-chloroacetylacetone were weighed, and the temperature was raised to around an internal temperature of 80°C while stirring with a magnetic stirrer. After reaching an internal temperature of 80°C, stirring was continued for 2 hours to obtain 20.00 g of a yellow liquid, a 3-chloroacetylacetone-neodecanoic acid tin/bis(neodecanoic acid) tin mixture <AB4>. In the 119Sn NMR analysis of this compound, it was confirmed that, in addition to the peak of bis(neodecanoic acid) tin (-0.500 ppm), a new peak of 3-chloroacetylacetone-neodecanoic acid tin (-0.558 ppm) appeared.

### <Production Example 12 (Dipivaloylmethane-neodecanoic acid tin/bis(neodecanoic acid) tin mixture <AB5>)>

In a 50 ml eggplant-shaped flask equipped with a nitrogen inlet tube, 19.4 g of bis(neodecanoic acid) tin and 0.6 g of dipivaloylmethane were weighed, and the temperature was raised to around an internal temperature of 80°C while stirring with a magnetic stirrer. After reaching an internal temperature of 80°C, stirring was continued for 2 hours to obtain 20.00 g of a yellow liquid, a dipivaloylmethane-neodecanoic acid tin/bis(neodecanoic acid) tin mixture <AB5>. In the 119Sn NMR analysis of this compound, it was confirmed that, in addition to the peak of bis(neodecanoic acid) tin (-0.500 ppm), a new peak of dipivaloylmethane-neodecanoic acid tin (-0.558 ppm) appeared.

### <Production Example 13 (1-Phenyl-1,3-butanedione-neodecanoic acid tin/bis(neodecanoic acid) tin mixture <AB6>)>

In a 50 ml eggplant-shaped flask equipped with a nitrogen inlet tube, 19.4 g of bis(neodecanoic acid) tin and 0.6 g of 1-phenyl-1,3-butanedione were weighed, and the temperature was raised to around an internal temperature of 80°C while stirring with a magnetic stirrer. After reaching an internal temperature of 80°C, stirring was continued for 2 hours to obtain 20.00 g of a yellow liquid, a 1-phenyl-1,3-butanedione-neodecanoic acid tin/bis(neodecanoic acid) tin mixture <AB6>. In the 119Sn NMR analysis of this compound, it was confirmed that, in addition to the peak of bis(neodecanoic acid) tin (-0.500 ppm), a new peak of 1-phenyl-1,3-butanedione-neodecanoic acid tin (-0.558 ppm) appeared.

### <Production Example 14 (Di-n-octanoic acid tin <B1>)>

In a 10 ml eggplant-shaped flask equipped with a nitrogen inlet tube, 1.0 g of tin(II) ethoxide, 1.38 g of n-octanoic acid, and 2 mL of ethanol were weighed and stirred with a magnetic stirrer until dissolved. The solvent was distilled off under reduced pressure to obtain 1.94 g of a pale yellow solid, di-n-octanoic acid tin <B1>.

### <Production Example 15 (Di-n-nonanoic acid tin <B2>)>

In a 10 ml eggplant-shaped flask equipped with a nitrogen inlet tube, 1.0 g of tin(II) ethoxide, 1.52 g of n-nonanoic acid, and 2 mL of ethanol were weighed and stirred with a magnetic stirrer until dissolved. The solvent was distilled off under reduced pressure to obtain 2.07 g of a pale yellow solid, di-n-nonanoic acid tin <B2>.

### <Production Example 16 (Bis(isononanoic acid) tin <B3>)>

In a 10 ml eggplant-shaped flask equipped with a nitrogen inlet tube, 1.0 g of tin(II) ethoxide, 1.52 g of isononanoic acid, and 2 mL of ethanol were weighed and stirred with a magnetic stirrer until dissolved. The solvent was distilled off under reduced pressure to obtain 2.07 g of a pale yellow solid, bis(isononanoic acid) tin <B3>.

The details of the materials shown in the Production Examples and Comparative Production Examples are as follows.
Tin(II) ethoxide: manufactured by FUJIFILM Wako Pure Chemical Corporation
Acetylacetone: manufactured by FUJIFILM Wako Pure Chemical Corporation
Neodecanoic acid: manufactured by FUJIFILM Wako Pure Chemical Corporation
Ethanol: super dehydrated, manufactured by FUJIFILM Wako Pure Chemical Corporation
3,5-Heptanedione: manufactured by Tokyo Chemical Industry Co., Ltd.
3-Chloroacetylacetone: manufactured by FUJIFILM Wako Pure Chemical Corporation
Dipivaloylmethane: manufactured by Tokyo Chemical Industry Co., Ltd.
1,3-Diphenyl-1,3-propanedione: manufactured by Tokyo Chemical Industry Co., Ltd.
1-Phenyl-1,3-butanedione: manufactured by Tokyo Chemical Industry Co., Ltd.
Ethyl acetoacetate: manufactured by FUJIFILM Wako Pure Chemical Corporation
n-Octanoic acid: manufactured by FUJIFILM Wako Pure Chemical Corporation
n-Nonanoic acid: manufactured by FUJIFILM Wako Pure Chemical Corporation
Isononanoic acid: manufactured by FUJIFILM Wako Pure Chemical Corporation

### 1. Production of Polyurethane Foam

In the Examples and Comparative Examples, 100 parts by mass of polyol, 0.6 parts by mass of foam stabilizer, 0.1 parts by mass of amine-based catalyst, 3.0 parts by mass of blowing agent, and the catalyst in the parts by mass and composition shown in Tables 1 to 5 were weighed into a cup container and stirred to prepare a mixed solution. Then, 40.2 parts by mass of isocyanate was added to the mixed solution and stirred, and a polyurethane foam was produced by slab foaming.

**[Table 1]**

| Table 1 | | Example | | | | | | | |
|---|---|---|---|---|---|---|---|---|---|
| | | 1 | 2 | 3 | 4 | 5 | 6 | 7 | 8 |
| | A1 | 0.10 | | | | | | | |
| | A2 | | 0.10 | | | | | | |
| | A3 | | | 0.10 | | | | | |
| | A4 | | | | 0.10 | | | | |
| Catalyst | A5 | | | | | 0.10 | | | |
| | A6 | | | | | | 0.10 | | |
| | A7 | | | | | | | 0.10 | |
| | Sn(acac)2 | | | | | | | | 0.10 |
| | Bis(neodecanoic acid) Tin | 0.10 | 0.10 | 0.10 | 0.10 | 0.10 | 0.10 | 0.10 | 0.10 |
| Evaluation | Rise Time (sec.) | 175 | 175 | 176 | 174 | 175 | 175 | 176 | 177 |
| | Curability | ○ | ○ | ○ | ○ | ○ | ○ | ○ | ○ |
| | Airflow Rate (L/min) | 9.9 | 8.7 | 9.7 | 10.1 | 8.6 | 9.0 | 10.0 | 9.5 |
| | Air Permeability | ○ | ○ | ○ | ○ | ○ | ○ | ○ | ○ |

**[Table 2]**

| Table 2 | | Example | | | | | | | |
|---|---|---|---|---|---|---|---|---|---|
| | | 9 | 10 | 11 | 12 | 13 | 14 | 15 | 16 |
| | A1 | 0.02 | | | | | | | |
| | A2 | | 0.02 | | | | | | |
| | A3 | | | 0.02 | | | | | |
| | A4 | | | | 0.02 | | | | |
| Catalyst | A5 | | | | | 0.02 | | | |
| | A6 | | | | | | 0.02 | | |
| | A7 | | | | | | | 0.02 | |
| | Sn(acac)2 | | | | | | | | 0.02 |
| | Bis(neodecanoic acid) Tin | 0.18 | 0.18 | 0.18 | 0.18 | 0.18 | 0.18 | 0.18 | 0.18 |
| Evaluation | Rise Time (sec.) | 171 | 171 | 172 | 171 | 172 | 172 | 172 | 173 |
| | Curability | ⊚ | ⊚ | ⊚ | ⊚ | ⊚ | ⊚ | ⊚ | ⊚ |
| | Airflow Rate (L/min) | 9.7 | 8.5 | 9.5 | 9.9 | 8.4 | 8.8 | 9.8 | 9.3 |
| | Air Permeability | ○ | ○ | ○ | ○ | △ | ○ | ○ | ○ |

**[Table 3]**

| Table 3 | | Example | | | | | |
|---|---|---|---|---|---|---|---|
| | | 17 | 18 | 19 | 20 | 21 | 22 |
| Catalyst | AB1 | 0.20 | | | | | |
| | AB2 | | 0.20 | | | | |
| | AB3 | | | 0.20 | | | |
| | AB4 | | | | 0.20 | | |
| | AB5 | | | | | 0.20 | |
| | AB6 | | | | | | 0.20 |
| Evaluation | Rise Time (sec.) | 174 | 171 | 171 | 172 | 170 | 171 |
| | Curability | ○ | ⊚ | ⊚ | ⊚ | ⊚ | ⊚ |
| | Airflow Rate (L/min) | 9.8 | 9.5 | 8.4 | 9.2 | 9.1 | 8.4 |
| | Air Permeability | ○ | ○ | △ | ○ | ○ | △ |

**[Table 4]**

| Table 4 | | Example | | | | | | | |
|---|---|---|---|---|---|---|---|---|---|
| | | 23 | 24 | 25 | 26 | 27 | 28 | 29 | 30 |
| | A1 | 0.04 | | | | | | | |
| | A2 | | 0.04 | | | | | | |
| | A3 | | | 0.04 | | | | | |
| | A4 | | | | 0.04 | | | | |
| Catalyst | A5 | | | | | 0.04 | | | |
| | A6 | | | | | | 0.04 | | |
| | A7 | | | | | | | 0.04 | |
| | Sn(acac)2 | | | | | | | | 0.04 |
| | Bis(neodecanoic acid) Tin | 0.16 | 0.16 | 0.16 | 0.16 | 0.16 | 0.16 | 0.16 | 0.16 |
| Evaluation | Rise Time (sec.) | 171 | 172 | 173 | 172 | 173 | 173 | 172 | 173 |
| | Curability | ⊚ | ⊚ | ⊚ | ⊚ | ⊚ | ⊚ | ⊚ | ⊚ |
| | Airflow Rate (L/min) | 9.8 | 8.6 | 9.6 | 10.0 | 8.5 | 8.9 | 9.9 | 9.4 |
| | Air Permeability | ○ | ○ | ○ | ○ | ○ | ○ | ○ | ○ |

**[Table 5]**

| Table 5 | | Comparative Example | | | | | |
|---|---|---|---|---|---|---|---|
| | | 1 | 2 | 3 | 4 | 5 | 6 |
| Catalyst | Bis(neodecanoic acid) Tin | 0.20 | | | | | |
| | A1 | | 0.20 | | | | |
| | Sn(acac)2 | | | 0.20 | | | |
| | B1 | | | | 0.20 | | |
| | B2 | | | | | 0.20 | |
| | B3 | | | | | | 0.20 |
| Evaluation | Rise Time (sec.) | 170 | 360 | 660 | 246 | 232 | 223 |
| | Curability | ⊚ | × | × | × | × | × |
| | Airflow Rate (L/min) | 7.7 | | | 7.8 | 7.9 | 7.9 |
| | Air Permeability | × | | | × | × | × |

The details of the materials shown in the tables are as follows.

Polyol: hydroxyl value 56.1 mgKOH/g, polypropylene glycol, number of functional groups 3, weight average molecular weight 3000, manufactured by Kishida Chemical Co., Ltd.

Foam stabilizer: VORASURF SH 192 Fluid, manufactured by Dow Toray Co., Ltd.
Amine-based catalyst: DABCO (manufactured by Tokyo Chemical Industry Co., Ltd.) diluted to 33% with dipropylene glycol (manufactured by Tokyo Chemical Industry Co., Ltd.)
Blowing agent: purified water
Sn(acac)2: manufactured by FUJIFILM Wako Pure Chemical Corporation
Bis(neodecanoic acid) tin: Neostann U-50 (manufactured by Nitto Kasei Co., Ltd.)
Isocyanate: toluene diisocyanate (TDI), manufactured by Tokyo Chemical Industry Co., Ltd.

### 2. Evaluation

### <Curability>

The time from the addition of isocyanate to the mixed solution until the foam height reached its maximum was measured as the rise time, and the curability was evaluated based on the obtained rise time according to the following criteria. The catalysts of Examples 1 to 8 and 17 had a good curability, and the catalysts of Examples 9 to 16 and 18 to 30 had an excellent curability. In all of the catalysts of Examples 1 to 8 and 17, the content of the tin compound (A) was more than 50 mass% with respect to the tin compound (B), whereas in all of the catalysts of Examples 9 to 16 and 18 to 30, the content of the tin compound (A) was 5 to 30 mass% with respect to the tin compound (B). Therefore, it is considered that the difference in curability is due to the difference in the content of the tin compound (A) with respect to the tin compound (B).

Excellent(⊚): 173 seconds or less
Good(O): More than 173 seconds to 200 seconds or less
Poor(×): More than 200 seconds

### <Air Permeability>

Air permeability was evaluated based on the air flow rate (L/min) measured in accordance with JIS K6400-7 Method A according to the following criteria. As shown in Tables 1 to 5, in all Examples, the air permeability was good or acceptable, whereas in all Comparative Examples, the air permeability was poor (Comparative Examples 1, 4 to 6), or a uniform foam could not be obtained and measurement was not possible (Comparative Examples 2 to 3). Therefore, it can be said that the catalyst compositions of the Examples of the present invention can produce a urethane foam excellent in air permeability (that is, satisfying the air permeability requirements).

Good(O): 8.5 or more
Acceptable(△): 8.0 or more and less than 8.5
Poor(×): Less than 8.0

## Claims

1. A catalyst composition for producing polyurethane foam, comprising a tin compound (A) represented by the following chemical formula (1) and a tin compound (B) represented by the following chemical formula (2). 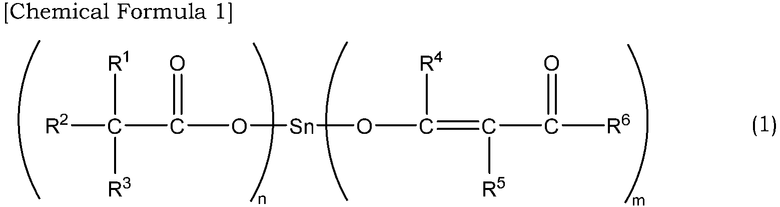 (In the formula, R¹, R², and R³ are each a hydrogen atom or a hydrocarbon group having 1 to 10 carbon atoms, and may be the same as or different from each other. R⁴ and R⁶ are each a substituted or unsubstituted hydrocarbon group having 1 to 20 carbon atoms, or a substituted or unsubstituted alkoxy group having 1 to 20 carbon atoms, and may be the same as or different from each other. R⁵ is a hydrogen atom, a hydrocarbon group having 1 to 10 carbon atoms, or a halogen. n and m are integers, n = 0 or 1, and n + m = 2.) 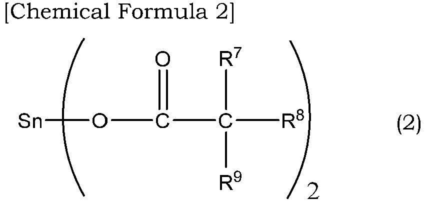 (In the formula, R⁷, R⁸, and R⁹ are each a hydrogen atom or an alkyl group having 1 to 10 carbon atoms, and may be the same as or different from each other.)

2. The catalyst composition according to Claim 1, wherein
the tin compound (A) represented by the chemical formula (1) is one or more selected from the group consisting of acetylacetone-neodecanoic acid tin, ethyl acetoacetate-neodecanoic acid tin, 3,5-heptanedione-neodecanoic acid tin, 3-chloroacetylacetone-neodecanoic acid tin, dipivaloylmethane-neodecanoic acid tin, 1,3-diphenyl-1,3-propanedione-neodecanoic acid tin, 1-phenyl-1,3-butanedione-neodecanoic acid tin, bis(acetylacetone) tin, bis(ethyl acetoacetate) tin, bis(3,5-heptanedione) tin, bis(3-chloroacetylacetone) tin, bis(dipivaloylmethane) tin, bis(1,3-diphenyl-1,3-propanedione) tin, and bis(1-phenyl-1,3-butanedione) tin.

3. The catalyst composition according to Claim 1, wherein
the tin compound (B) represented by the chemical formula (2) is bis(neodecanoic acid) tin.

4. The catalyst composition according to Claim 1, wherein
the content of the tin compound (A) is 1 to 50 mass% with respect to the tin compound (B).

5. A method for producing a polyurethane foam, comprising reacting an active hydrogen-containing organic compound containing a polyol with a polyisocyanate in the presence of the catalyst composition according to any one of Claims 1 to 4.
